# EUROPÄISCHE PATENTANMELDUNG

(11) **EP 4 775 416 A1**
(43) Veröffentlichungstag der Anmeldung: **15.07.2026**
(21) Anmeldenummer: 25217390.1
(22) Anmeldetag: 20.11.2025
(51) Int. Cl.: B60G 7/02, B62D 21/15

(54) **VORDERACHSE EINES KRAFTFAHRZEUGS UND KRAFTFAHRZEUG**

(30) Priorität: 09.01.2025 DE 102025100565
(71) Anmelder: AUDI AG, 85057 Ingolstadt (DE)
(72) Erfinder: Margraf, Maximilian, 85111 Möckenlohe (DE); Wäschenbach, David, 57462 Olpe (DE)

(57) **Zusammenfassung**

Die Erfindung betrifft eine Vorderachse eines Kraftfahrzeugs, umfassend zwei Radaufhängungen mit jeweils einem Lenker und einen Hilfsrahmen. Die Lenker sind jeweils in Zugstrebenanordnung ausgebildet und weisen eine Zugstrebe, zumindest einen Querlenker und zumindest ein Lenklager mit einer Lagerachse auf. Der Hilfsrahmen weist in Fahrzeuglängsrichtung Längsträger und in Fahrzeugquerrichtung zumindest einen Querträger auf. Die Längsträger sind mit dem zumindest einen Querträger in einem Verbindungsbereich starr verbunden. Die Querlenker sind jeweils zwischen Radaufhängung und einem Längsträger gelagert. Die Erfindung zeichnet sich dadurch aus, dass der Querträger einen zentralen, senkrecht zur Fahrzeuglängsachse verlaufenden Basisbereich und an jeweils einem Ende des Basisbereich einen schräg nach vorne in Bezug auf die Fahrzeuglängsrichtung ausgebildeten Auslegerbereich aufweist. Die Lenker sind jeweils mittels den Lenklagern im Auslegerbereich gelenkig an den Auslegerbereich des Querträgers gelagert sind. Das freie Ende des Auslegerbereichs ist in seitlicher Erstreckung innerhalb des Bereichs der geringen seitlichen Überdeckung des Kraftfahrzeugs mit einer Barriere ausgebildet.

## Beschreibung

Die Erfindung betrifft eine Vorderachse eines Kraftfahrzeugs nach der im Oberbegriff des Patentanspruchs 1 angegebenen Art, sowie ein Kraftfahrzeug nach der im Oberbegriff des Patentanspruchs 10 angegebenen Art.

Small-Overlap-Crashversuche sind ein essenzieller Bestandteil der Sicherheitsprüfung moderner Kraftfahrzeuge. Diese Tests simulieren eine Kollision, bei der nur ein kleiner Teil der Fahrzeugfront (etwa 25 % oder weniger) mit einem starren Hindernis oder einer Barriere in Kontakt kommt. Solche Szenarien treten häufig bei realen Unfällen auf, etwa bei Kollisionen mit Bäumen, Laternenmasten oder der Fahrzeugseite eines anderen Fahrzeugs. Im Gegensatz zu zentralen Frontalcrashtests stellen Small-Overlap-Crashes eine erhebliche technische Herausforderung dar, da der Aufprallbereich oft außerhalb der primären Lastpfade des Fahrzeugs liegt. Dadurch wird die Energieabsorption erschwert, was zu einer geringeren strukturellen Integrität und erhöhten Verletzungsrisiken führen kann.

Ein zentrales Problem ist dabei die Barrierenüberdeckung. Wenn der Kontaktbereich der Barriere nur einen geringen Teil der Kraftfahrzeugfront abdeckt, bleiben viele strukturkritische Bauteile bei einer Kollision, wie Längsträger, ungenutzt. Dies führt zu unkontrollierten Verformungen und einer ineffizienten Energieeinleitung. Besonders kritisch ist dies für Bereiche wie den A-Säulenanschluss und die Türstruktur, die bei solchen Aufprallen hohen Belastungen ausgesetzt sind

Es ist allgemein bekannt, um die Barrierenüberdeckung eines Kraftfahrzeugs während eines Crashs zu reduzieren verschiedene Maßnahmen im Kraftfahrzeug vorzusehen. So kann beispielsweise ein verbreiterter Hilfsrahmen vor dem vorderen Lenklager ausgebildet sein oder zusätzliche Montageteile am Hilfsrahmen angeordnet werden, um im Falle eines Crashs mit geringer Breitenüberdeckung einen frühzeitigen Energiebau zu ermöglichen und die Fahrgastzelle zu entlasten. Diese bekannten Maßnahmen haben allerdings den Nachteil, dass durch den Einbau von Zusatzbauteilen erhebliche Zusatzkosten entstehen. Weiterhin wird durch zusätzliche Bauteile ein sehr großer Bauraum benötigt. Dies führt zwangsläufig zu einer verlängerten Bauweise des Kraftfahrzeugs.

Aus dem Stand der Technik sind unterschiedliche Konzepte zur Reduzierung der Risiken bei einem Small-Overlap-Crash bekannt. Die DE 10 2012 024 145 A1 sieht im Falle eines seitlichen Aufpralls vor einen Radlenker mit Rückverlagerung eines Schutzelements entgegen der Fahrtrichtung nach hinten zu verlagern. Hierdurch soll verhindert werden, dass bei einem Aufprall die Vorderräder in Richtung Stirnwandbereich - zur Fahrzeugmitte hin - eingedreht und bewegt werden.

Weiterhin ist aus der DE 10 2018 208 784 A1 eine Deformationsstruktur bekannt, die eine Streben- und/oder Hebelanordnung aufweist, die im Falle eines Frontaufpralls mit vollständiger Breitenüberdeckung durch Verformung und Verlagerung dieser Streben- und/oder Hebelanordnung ein Eindringen in die Fahrgastzelle verhindert.

In der DE 10 2021 114 673 A1 ist ein System im Bereich der Lenker und deren Anbindung an den Hilfsrahmen zum Steuern der Radkinematik während eines Crashs mit geringer Breitenüberdeckung.

Die DE 10 2021 132 464 A1 offenbart eine Lagerungsanordnung eines Radlenkers an einem Achsträger der Kraftfahrzeugs.

Es ist Aufgabe der Erfindung zur Reduzierung der Überdeckung des Kraftfahrzeugs eine Vorderachse weiterzubilden, die im Falle eines Crashs mit geringer Breitenüberdeckung einen frühzeitigen Energieabbau ermöglicht und gleichzeitig eine kompakte Fahrzeugbauweise gewährleistet.

Diese Aufgabe wird durch die kennzeichnenden Merkmale des Patentanspruchs 1 in Verbindung mit seinen Oberbegriffsmerkmalen gelöst.

Die Unteransprüche 2 bis 9 stellen jeweils vorteilhafte Ausführungsformen der Erfindung dar.

In bekannter Art und Weise umfasst eine Vorderachse eines Kraftfahrzeugs, zwei Radaufhängungen mit jeweils einem Lenker und einem Hilfsrahmen. Die Lenker sind jeweils in einer Zugstrebenanordnung ausgebildet. Die Lenker weisen jeweils eine Zugstrebe, zumindest einen Querlenker und zumindest ein Lenklager auf. Die Zugstrebe ist dazu ausgebildet Längskräfte und der Querlenker dazu ausgebildet Querkräfte in die Fahrzeugstruktur abzuleiten. Zugstrebe und Querlenker sind jeweils mit einer Seite an der Radaufhängung gelagert. Der Hilfsrahmen weist in Fahrzeuglängsrichtung zwei Längsträger und in Fahrzeugquerrichtung zumindest einen Querträger auf. Die Längsträger können dabei parallel zueinander angeordnet sein. Die Längsträger sind jeweils mit dem zumindest einen Querträger starr in einem Verbindungsbereich verbunden. Die Querlenker sind jeweils zwischen Radaufhängung und einer Längsachse gelagert.

Erfindungsgemäß weist der Querträger einen zentralen Basisbereich und an jeweils einem Ende des Basisbereich einen schräg nach vorne in Bezug auf die Fahrzeuglängsrichtung ausgebildeten Auslegerbereich auf. Der Querträger ist symmetrisch ausgebildet in Bezug auf eine Symmetrieachse die entlang der Fahrzeuglängsrichtung orientiert ist. Die Lenker sind jeweils mittels den Lenklagern im Auslegerbereich gelenkig an den Auslegerbereich des Querträgers gelagert. Das freie Ende des Auslegerbereichs ist in seitlicher Erstreckung innerhalb des Bereichs der geringen seitlichen Überdeckung des Kraftfahrzeugs mit einer Barriere ausgebildet. Hierdurch wird bei einem Crash mit geringer seitlicher Überdeckung die aus dem Crash resultierende äußere Kraft frühzeitig durch den Auslegerbereich des Querträgers aufgenommen und über die im Auslegerbereich angeordnete Abstützung des Lenklagers über den Lagerkern der Kraftfluss über den Verbindungsbereich direkt auf die Längsträger übertragen. Durch die geometrische Ausbildung des Auslegerbereichs und die Abstützung durch das Lenklager und die Zugstrebe wird der Kraftfluss zuverlässig in Querkräfte gewandelt, die einen Querversatz des Kraftfahrzeugs bewirken können.

Gemäß einer weiteren vorteilhaften Ausbildungsform der Erfindung entspricht die Lagerachse des Lenklagers der Längsachse des Auslegerbereichs oder die Lagerachse des Lenklagers ist parallel zur Längsachse des Auslegerbereichs ausgebildet. Durch diese Orientierung der Lagerachse des Lenklagers ist bei einem Crash mit geringer seitlicher Überdeckung ein Kraftfluss parallel bzw. entlang der Lagerachse gewährleistet. Hierdurch wird eine ideale Kraftübertragung gewährleistet und zusätzliche Biegemomente, die zu Verformungen führen können werden vermieden.

Vorzugsweise ist das vordere Lenklager als hydraulisch bzw. hydraulisch gedämpftes Lager ausgebildet. Hierdurch können Schwingungen, wie Anfahrmomente, Unwuchten oder das Einwirken von äußeren Kräften und Drehmomentspitzen minimiert werden.

Bevorzugt ist an der dem Auslegerbereich abgewandten Seite des Längsträgers ein Abstützelement zwischen Längsträger und Basisbereich des Querträgers ausgebildet. Das Abstützelement ist dabei diagonal zwischen dem Längsträger und dem Basisbereich des Querträgers angeordnet. Durch das Vorsehen des Abstützelements wird der Kraftfluss während eines Crashs mit geringer Breitenüberdeckung vom Längsträger auf den Basisbereich des Querträgers geleitet. Hierdurch wird eine gleichmäßige Kraftverteilung auf den gesamten Hilfsrahmen ermöglicht und eine einseitige Belastung vermieden.

Gemäß einer weiteren vorteilhaften Ausbildungsform der Erfindung ist der Querträger aus stoffschlüssig verbunden Schalenelementen gebildet. Hierdurch ist ein einfacher Aufbau des Querträgers gewährleistet, der durch seine Steifigkeit ideal zur Weiterleitung von Kräften geeignet ist und dadurch zu einer strukturellen Steifigkeit des Hilfsrahmens beiträgt.

Vorzugsweise ist der Querträger aus Stahl oder Aluminium ausgebildet. Besonders bevorzugt weist der Querträger Versteifungsplatten aus Stahl auf, die auf den Grundkörper der Querträgers geschweißt sind um eine Verformung des Querträgers zu minimieren und im Bereich der Hauptlastpfade einen besseren Kraftfluss zu den Längsträgern zu gewährleisten. Der Hilfsrahmen, einschließlich des integrierten Querträgers, kann zur Gewichtsreduktion aus Aluminium gefertigt sein..

Bevorzugt sind die Längsachse des Auslegerbereichs in einem Winkel von größer gleich 20° und kleiner gleich 80° zu einer Querachse des Kraftfahrzeugs ausgebildet sind. Ein kleinerer Winkel führt zu einem späten Energieabbau und zu erheblichen Biegemomenten am Querträger. Ein größerer Winkel führt zu einem sehr hohen Bauraumbedarf in Fahrzeuglängsrichtung.

Gemäß einer weiteren vorteilhaften Ausbildungsform der Erfindung ist das freie Ende des Auslegerbereichs abgerundet ausgebildet. Durch die Rundung am freien Ende des Auslegerbereichs des Querträgers ist eine Abgleitfunktion des Querträgers realisiert. Die Abgleitfunktion beschreibt die Fähigkeit des Hilfsrahmens, das Kraftfahrzeug so zu führen, dass es bei einem Aufprall mit einer Barriere nicht vollständig in die Barriere "eintaucht". Stattdessen soll das Kraftfahrzeug in eine kontrollierte Richtung abgleiten, um die Verformung des Kraftfahrzeugs und die Belastung auf die Fahrgastzelle zu minimieren. Scharfe Kanten am Querträger können Spannungen konzentrieren und zu Rissen oder lokalen Verformungen führen. Rundungen verteilen die Kräfte gleichmäßiger und reduzieren das Risiko strukturellen Versagens.

Ein weiterer Aspekt der Erfindung betrifft ein Kraftfahrzeug mit einer Vorderachse, umfassend zwei Lenker mit jeweils einem Lenklager, einen Hilfsrahmen, wobei die Lenker jeweils in Zugstrebenanordnung ausgebildet sind, wobei der Hilfsrahmen in Fahrzeuglängsrichtung Längsträger und in Fahrzeugquerrichtung zumindest einen Querträger aufweist, wobei die Längsträger mit dem zumindest einen Querträger jeweils in einem Verbindungsbereich starr verbunden sind.

Erfindungsgemäß ist der Querträger wie oben beschrieben ausgebildet.

Weitere Vorteile und Anwendungsmöglichkeiten der Erfindung ergeben sich aus der nachfolgenden Beschreibung in Verbindung mit in den Zeichnungen dargestellten Ausführungsformen.

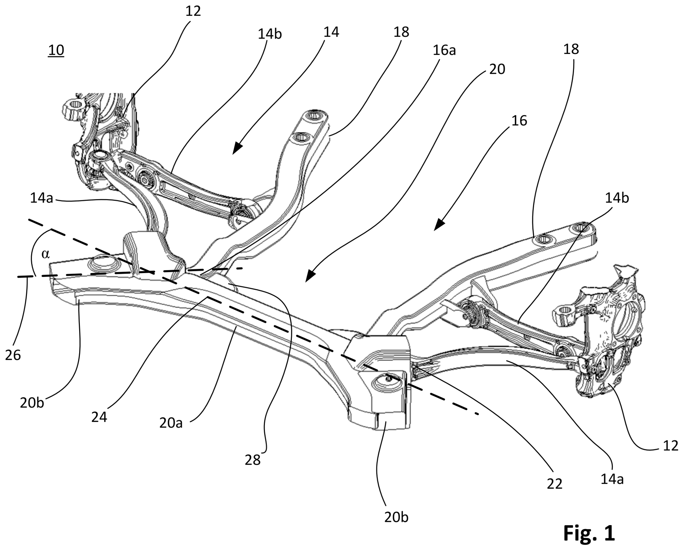

- Fig. 1: eine perspektivische Ansicht von schräg vorne der erfindungsgemäßen Vorderachse ein Kraftfahrzeugs.

Die Fig. 1 zeigt eine Vorderachse 10 mit zwei Radaufhängungen 12, zwei Lenkern 14 und einem Hilfsrahmen 16. Die Lenker 14 sind zwischen den Radaufhängungen 12 und dem Hilfsrahmen 16 gelenkig gelagert. Die Vorderachse 10 ist dabei symmetrisch ausgebildet, wobei die Symmetrieachse entlang der Fahrzeuglängsrichtung orientiert ist.

Der Hilfsrahmen 16 weist zwei Längsträger 18 und einen Querträger 20 auf. Die Längsträger 18 verlaufen in Fahrzeuglängsrichtung und der Querträger 20 im Wesentlichen in Fahrzeugquerrichtung. Jeweils am in Fahrzeuglängsrichtung vorderen Ende der Längsträger 18 sind die Längsträger 18 starr mit dem Querträger 20 in einem Verbindungsbereich 16a des Hilfsrahmens 16 verbunden. Der Querträger 20 und die Längsträger 18 sind jeweils aus Stahl ausgebildet.

Der Querträger 20 weist einen Basisbereich 20a und an jedem seitlichen Ende des Basisbereichs 20a jeweils einen Auslegerbereich 20b auf. Der Basisbereich 20a verläuft dabei entlang einer Basisbereichsachse 24 und der Auslegerbereich 20b entlang einer Auslegerbereichsachse 26 nach schräg vorne in Bezug auf die Fahrzeuglängsachse. Die Basisbereichsachse 24 ist dabei in Fahrzeugquerrichtung orientiert. Die Basisbereichsachse 24 und die Auslegerbereichsachse 26 spannen einen Winkel α auf. Der Winkel α ist dabei größer gleich 20° und kleiner gleich 80° ausgebildet.

Die Lenker 14 sind in Zugstrebenanordnung ausgebildet und weisen jeweils eine Zugstrebe 14a und einen Querlenker 14b auf. Der Querlenker 14b ist zwischen Radaufhängung 12 und einem der Längsträger 18 gelagert. Die Zugstrebe 14a ist mit einem Lenklager 22 jeweils zwischen Radaufhängung 12 und dem Auslegerbereich 20b des Querträgers 20 gelenkig gelagert. Das Lenklager 22 ist als Hydrolager ausgebildet. Der Lagerkern des Lenklagers 22 weist eine Lagerachse auf. Die Lagerachse entspricht dabei der Auslegerbereichsachse 26. Der Lagerkern kann auch so orientiert sein, dass die Lagerachse parallel zur Auslegerbereichsachse 26 ausgebildet ist.

Der Auslegerbereich 20b befindet sich innerhalb des Bereichs der geringen seitlichen Überdeckung des Kraftfahrzeugs zur Barriere. Bei einem Crash des Kraftfahrzeugs mit geringer seitlicher Überdeckung wird die aus dem Crash resultierende äußere Kraft aufgrund des auf die Barriere prallenden Kraftfahrzeugs frühzeitig durch den nach schräg vorne orientierten Auslegerbereich 20b des Querträgers 20 aufgenommen. Der Kraftfluss erfolgt dann vom Auslegerbereich 20b über die Lagerkerne der Lenklager und den Verbindungsbereich 16a auf die Längsträger und als Querkraftanteil auf den Basisbereich 20a. Über den Basisbereich 20a wird die einwirkende Kraft auch auf die von der geringen seitlichen Überdeckung gegenüberliegende Seite des Hilfsrahmens 16 geleitet. Die resultierenden Querkräfte können einen Querversatz des Kraftfahrzeugs bewirken.

Die Auslegerbereiche 20b weisen jeweils an ihrem freien Ende eine Rundung auf. Durch die Rundung wird die Abgleitfunktion des Querträgers 20 im Bereich der Auslegerbereiche 20b verbessert.

Der Querträger 20 ist aus jeweils zwei Halbschalenteilelementen ausgebildet, die miteinander starr verbunden sind. Zwischen dem Querträger 20 und jeweils einem Längsträger 18 ist an der dem Auslegerbereich 20b abgewandten Seite des Längsträgers 18 zwischen dem Längsträger 18 und dem Basisbereich 20a des Querträgers 20 ein Abstützelement 28 angeordnet bzw. ausgebildet.

Durch die erfindungsgemäße Ausbildung des Querträgers 20 mit den schräg nach vorne verlaufenden Auslegerbereichen 20b ist jeweils ein frühzeitiger Energieabbau bei einem Crash mit geringer seitlicher Überdeckung realisiert. Durch die Abstützung des Auslegerbereichs 20b über das Lenklager 22 wird das Lenklager 22 in der Kraftfluss integriert und sorgt für eine frühzeitige Umwandlung der Kraft in eine Querkraft, die über den gesamten Hilfsrahmen 16 abgeleitet wird.

## Patentansprüche

1. Vorderachse (10) eines Kraftfahrzeugs, umfassend zwei Radaufhängungen (12) mit jeweils einem Lenker (14) und einen Hilfsrahmen (16), wobei die Lenker (14) jeweils in Zugstrebenanordnung ausgebildet sind und eine Zugstrebe (14a), zumindest einen Querlenker (14b) und zumindest ein Lenklager (22) mit einer Lagerachse aufweisen, wobei der Hilfsrahmen (16) in Fahrzeuglängsrichtung Längsträger (18) und in Fahrzeugquerrichtung zumindest einen Querträger (20) aufweist, wobei die Längsträger (18) mit dem zumindest einen Querträger (20) jeweils in einem Verbindungsbereich (16a) starr verbunden sind, und wobei die Querlenker (14b) jeweils zwischen Radaufhängung (12) und einem Längsträger (18) gelagert sind, **dadurch gekennzeichnet, dass** der Querträger (20) einen zentralen, senkrecht zur Fahrzeuglängsrichtung verlaufenden Basisbereich (20a) und an jeweils einem Ende des Basisbereich (20a) einen schräg nach vorne in Bezug auf die Fahrzeuglängsrichtung ausgebildeten Auslegerbereich (20b) aufweist, wobei die Lenker (14) jeweils mittels den Lenklagern im Auslegerbereich (20b) gelenkig an den Auslegerbereich (20b) des Querträgers (20) gelagert sind, und wobei das freie Ende des Auslegerbereichs (20b) in seitlicher Erstreckung innerhalb des Bereichs der geringen seitlichen Überdeckung des Kraftfahrzeugs mit einer Barriere ausgebildet ist.

2. Vorderachse eines Kraftfahrzeugs nach Anspruch 1, **dadurch gekennzeichnet, dass** die Lagerachse des Lenklagers der Längsachse (26) des Auslegerbereichs (20b) des Querträgers (20) entspricht oder die Lagerachse des Lenklagers parallel zur Längsachse (26) des Auslegerbereichs (20b) ausgebildet ist.

3. Vorderachse eines Kraftfahrzeugs nach einem der vorangehenden Ansprüche, **dadurch gekennzeichnet, dass** das vordere Lenklager (22) als hydraulisch bzw. hydraulisch gedämpftes Lager ausgebildet ist.

4. Vorderachse eines Kraftfahrzeugs nach einem der vorangehenden Ansprüche, **dadurch gekennzeichnet, dass** an der dem Auslegerbereich (20b) abgewandten Seite des Längsträgers (18) ein Abstützelement zwischen Längsträger (18) und Basisbereich (20a) des Querträgers (20) ausgebildet ist.

5. Vorderachse eines Kraftfahrzeugs nach einem der vorangehenden Ansprüche, **dadurch gekennzeichnet, dass** der Querträger (20) als Einheit aus stoffschlüssig verbunden Schalenelementen gebildet ist.

6. Vorderachse eines Kraftfahrzeugs nach einem vorangehenden Ansprüche, **dadurch gekennzeichnet, dass** Auslegerbereich (20b) und Basisbereich (20a) starr verbunden sind.

7. Vorderachse eines Kraftfahrzeugs nach einem der vorangehenden Ansprüche, **dadurch gekennzeichnet, dass** der Querträger (20) aus Stahl oder Aluminium ausgebildet ist.

8. Vorderachse eines Kraftfahrzeugs nach einem der vorangehenden Ansprüche, **dadurch gekennzeichnet, dass** die Längsachse (26) des Auslegerbereichs in einem Winkel α von größer gleich 20° und kleiner gleich 80° zu einer Querachse (24) des Kraftfahrzeugs ausgebildet sind.

9. Vorderachse eines Kraftfahrzeugs nach einem der vorangehenden Ansprüche, **dadurch gekennzeichnet, dass** das freie Ende des Auslegerbereichs (20a) abgerundet ausgebildet ist.

10. Kraftfahrzeug mit einer Vorderachse (10), umfassend zwei Lenker (14) mit jeweils einem Lenklager (22), einen Hilfsrahmen (16), wobei die Lenker (14) jeweils in Zugstrebenanordnung ausgebildet sind, wobei der Hilfsrahmen (16) in Fahrzeuglängsrichtung Längsträger (18) und in Fahrzeugquerrichtung zumindest einen Querträger (20) aufweist, wobei die Längsträger (18) mit dem zumindest einen Querträger (20) jeweils in einem Verbindungsbereich (16a) starr verbunden sind, **dadurch gekennzeichnet, dass** der Querträger (20) nach einem der vorangehenden Ansprüche ausgebildet ist.
